Europäisches Patentamt

European Patent Office

Office européen des brevets

(11) Veröffentlichungsnummer: **0 183 123**
**A1**

# (12) EUROPÄISCHE PATENTANMELDUNG

(21) Anmeldenummer: 85114346.1

(22) Anmeldetag: 12.11.85

(51) Int. Cl.⁴: **G 01 N 27/56**

(30) Priorität: 20.11.84 DE 3442295

(43) Veröffentlichungstag der Anmeldung:
04.06.86 Patentblatt 86/23

(84) Benannte Vertragsstaaten:
AT BE CH FR GB IT LI NL SE

(71) Anmelder: Karl Dungs GmbH & Co.

D-7067 Urbach(DE)

(72) Erfinder: Dungs, Karl
Künkelinstrasse 52
D-7060 Schorndorf(DE)

(72) Erfinder: Mattes, Gerd
Ludwigstrasse 32
D-7060 Schorndorf(DE)

(72) Erfinder: Haug, Rudolf
Urbacher Strasse 23/1
D-7060 Schorndorf-Haubersbronn(DE)

(72) Erfinder: Schmidberger, Rainer, Dr.
Reussenbachstrasse 33
D-7778 Markdorf(DE)

(72) Erfinder: Röttenbacher, Reinhard, Dr.
Flurstrasse 8a
D-7777 Salem 3(DE)

(74) Vertreter: Patentanwälte Kohler - Schwindling - Späth
Hohentwielstrasse 41
D-7000 Stuttgart 1(DE)

(54) Messsonde und Verfahren zur Bestimmung des Sauerstoffgehaltes.

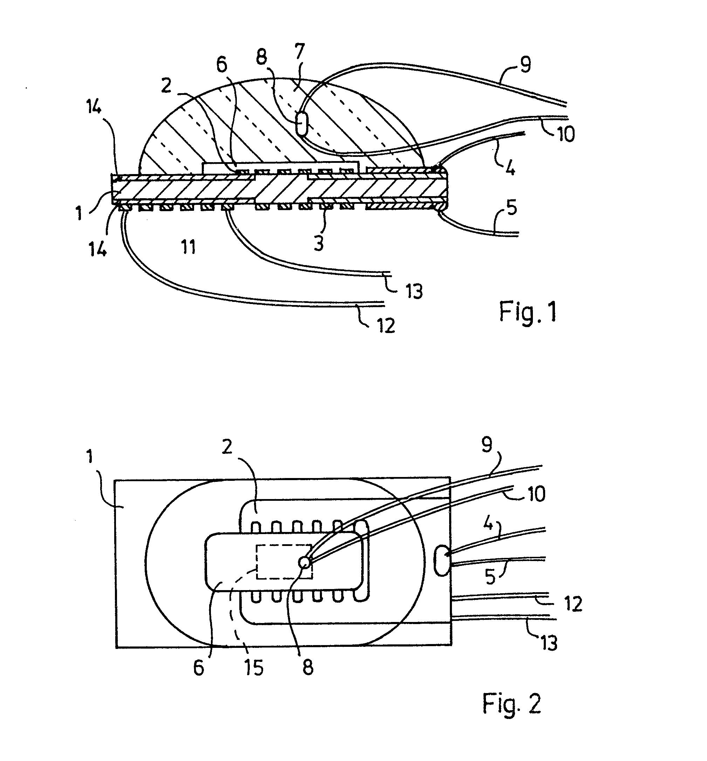

(57) Eine Meßsonde zur Bestimmung des Sauerstoffgehaltes gasförmiger oder flüssiger Medien besteht aus einer Keramikplatte (1), die einen festen Elektrolyten bildet und auf einer Seite einem mit einem Metall/Metalloxid-Redoxsystem (6) beschichteten Abschnitt aufweist, über dem sich ein elektrisch isolierendes, undurchlässiges und wärmebeständiges Deckmaterial (7) in Form eines Glastropfens befindet. In dem vom Redoxsystem bedeckten Bereich ist die Keramikplatte an beiden Seiten mit ihrer Oberfläche kontaktierenden elektrischen Anschlußleitungen (2,4 bzw. 3,5) versehen. In den Glastropfen (7) ist ein Thermoelement (8) eingebettet. Die Keramikplatte (1) kann, gegebenenfalls zusammen mit einer sie umgebenden Heizwendel, in ein Durchtrittsöffnungen für das überwachende Medium aufweisendes Gehäuse eingebaut sein. Das Verfahren zur Bestimmung des Sauerstoffgehaltes gasförmiger oder flüssiger Medien unter Verwendung einer solchen Meßsonde besteht darin, daß die Temperatur der Meßsonde auf einem Wert gehalten wird, bei dem die Spannung zwischen den Anschlußleitungen null ist (Fig. 1).

Fig. 1

Anmelder:
Firma
Karl Dungs GmbH & Co.
7067 Urbach

Stuttgart, 19. November 1984
P 4598 EP S-ef

Vertreter:
Kohler - Schwindling - Spaeth
Patentanwälte
Hohentwielstraße 41
7000 Stuttgart 1

## Meßsonde und Verfahren zur Bestimmung des Sauerstoffgehaltes

Die Erfindung betrifft eine Meßsonde zur Bestimmung des Sauerstoffgehaltes gasförmiger oder flüssiger Medien mit einer ein Metall/Metalloxid-Redoxsystem, insbesondere Palladium/Palladiumoxid, dicht einschließenden Kapsel, die eine von einem festen, Sauerstoffionen leitenden Elektrolyten gebildete Wandung aufweist, und mit die Wandung in dem vom Redoxsystem bedeckten Bereich an der Innen- und Außenseite kontaktierenden elektrischen Anschlußleitungen.

Eine solche Meßsonde ist aus der DE-PS 24 43 037 bekannt. Sie besteht aus einem an einem Ende geschlossenen Keramikrohr, das den festen Elektrolyten bildet und in das das Redoxsystem eingefüllt ist. Eine der elektrischen Anschlußleitungen ist in das Innere des Rohres eingeführt und weist ein gewendeltes Ende auf, das an der Innenseite des Keramikrohres anliegt. Das offene Ende des Keramikrohres ist mit einem Stopfen und einer Versiegelung versehen.

Der Miniaturisierung einer solchen Meßsonde sind Grenzen gesetzt, weil sich der Durchmesser des Rohres, in dem das Redoxsystem und eine Anschlußleitung unterzubringen sind, nicht beliebig verkleinern läßt. Außerdem bereitet das Füllen des Rohres mit dem Redoxsystem und das Einbringen eines die Innenseite des Rohres einwandfrei kontaktierenden Leiters erhebliche Schwierigkeiten, die umso größer werden, je geringer die Abmessungen des Rohres sind. Weiterhin bestehen erhebliche Schwierigkeiten beim Verschließen und Abdichten des Rohres am offenen Ende, zumal wenigstens eine Anschlußleitung durch den Verschluß gasdicht hindurchgeführt werden muß.

Demgegenüber liegt der Erfindung die Aufgabe zugrunde, eine Meßsonde derart weiterzubilden, daß sie ohne Schwierigkeiten mit kleinsten Abmessungen zuverlässig herstellbar ist.

Diese Aufgabe wird nach der Erfindung dadurch gelöst, daß die Wandung von einem flächigen Bauteil gebildet wird, das auf einer Seite einen mit dem Metall/Metalloxid-Redoxsystem beschichteten Abschnitt aufweist, über dem sich ein elektrisch isolierendes, undurchlässiges und wärmebeständiges Deckmaterial befindet.

Bei der erfindungsgemäßen Meßsonde wird demnach nicht von einem rohrförmigen Hohlkörper Gebrauch gemacht, um das als Vergleichssubstanz dienende und daher von der zu messenden Umgebung zu isolierende Redoxsystem einzuschließen, sondern es wird ein flächiger Körper benutzt, der auf einer Seite beschichtet wird. Hierzu können die üblichen Beschichtungstechniken Verwendung finden, wie sie aus der Mikroelektronik hinlänglich bekannt sind. Diese Methoden erlauben sowohl das Aufbringen einer Schicht aus dem Metall/Metalloxid-Redoxsystem als auch das Aufbringen einer allen Anforderungen genügenden Deckschicht. Diese Methoden erlauben ohne weiteres eine Serienfertigung von extrem kleinen Bauelementen, die zugleich äußerst zuverlässig sind und trotzdem nur geringe Kosten verursachen. Solche Bauelemente sind beispielsweise zum Einsatz als $\lambda$-Sonden hervorragend geeignet.

Im einfachsten Fall kann das Bauteil eine ebene Keramikplatte sein. Ebene Platten lassen sich besonders einfach herstellen und auch weiterverarbeiten, auch wenn es grundsätzlich möglich wäre, mehr oder weniger schalenförmige Bauteile zu verwenden, an deren Hohlseite das Redoxsystem angeordnet ist.

Als Deckmaterial ist besonders Glas geeignet. Glas kann beispielsweise in Form von Siliciumdioxid in der aus der Mikroelektronik bekannten Weise aufgebracht werden. Es wäre aber auch möglich, flüssige Glastropfen auf das Bauteil mit dem Redoxsystem aufzubringen.

Ebenso können die Anschlußleitungen durch die in der Mikroelektronik üblichen Druck- und Beschichtungsverfahren in optimalen Mustern aufgebracht werden. So können insbesondere unterhalb des Redoxsystems an der Oberfläche des Bauteils Leitungsbahnen in Form eines Gittermusters aufgebracht werden, das den Austausch von Sauerstoff-Ionen durch das einen festen Elektrolyten bildende Bauteil hindurch mit der Umgebung zuläßt und zugleich eine einwandfreie Messung der an dem Bauteil anliegenden Spannung gewährleistet. Es ist jedoch zweckmäßig, die Leitungsabschnitte außerhalb des beschichteten Abschnittes von dem Bauteil durch eine Isolierschicht zu trennen, um störende Einflüsse dieser Leitungsabschnitte auszuschalten.

Die an der Wandung anliegende Redox-Spannung ist bekanntlich temperaturabhängig. Daher erfordert eine genaue Bestimmung des Sauerstoffgehaltes des die Meßsonde umgebenden Mediums neben der Messung der Redox-Spannung auch eine genaue Messung der Temperatur der Meßsonde. Zu diesem Zweck ist die oben behandelte, bekannte Meßsonde mit einem Thermoelement versehen, das innerhalb des Keramikrohres angeordnet ist. Hierdurch wird der Aufbau der bekannten Sonde noch weiter kompliziert. Die erfindungsgemäße Sonde bietet dagegen die Möglichkeit, das Thermoelement in beliebiger Weise an der Außenseite des flächigen Bauteiles zu befestigen. Vorzugsweise wird das Thermoelement in das Deckmaterial eingebettet. Insbesondere dann, wenn das Deckmaterial von einem Glastropfen gebildet wird, bietet es ausreichend Platz, um das Thermoelement aufzunehmen. Dabei wird es durch das Einschmelzen in den Glastropfen zugleich sicher gehalten und gegen störende Umwelteinflüsse sicher geschützt.

Wenn der Sauerstoffgehalt kalter Medien gemessen werden soll, so daß die Meßsonde nicht durch das zu messende Medium selbst auf eine geeignete Betriebstemperatur gebracht wird, ist es notwendig, die Sonde aufzuheizen. Deshalb sind bei einer Ausführungsform der erfindungsgemäßen Meßsonde auf wenigstens eine Seite des flächigen Bauteiles die Leiter eines elektrischen Heizelementes aufgebracht. Auch hier können wieder die üblichen Methoden zur Aufbringung elektrischer Leitungen auf die Oberfläche isolierender Bauteile angewendet werden. Wegen der geringen Abmessungen sind nur äußerst geringe Heizleistungen erforderlich, die ohne weiteres von auf die Oberfläche aufgebrachten Heizleitern erzeugt werden können. Vorzugsweise werden die Leiter des Heizelementes auf der der Seite mit dem beschichteten Abschnitt entgegengesetzten Seite des flächigen Bauteiles aufgebracht.

Es versteht sich, daß das flächige Bauteil auch von einer gesonderten Heizwendel umgeben sein könnte.

Zur Schaffung einer Meßsonde in Form eines leicht zu handhabenden Bauelementes kann in weiterer Ausgestaltung der Erfindung das flächige Bauteil ggf. zusammen mit einer es umgebenden Heizwendel in ein Durchtrittsöffnungen für das zu überwachende Medium aufweisendes Gehäuse eingebaut sein.

Die bei den Meßsonden der beschriebenen Art an dem festen Elektrolyten auftretende Spannung beruht auf der Wanderung von Sauerstoff-Ionen vom zu messenden Medium zum Redoxsystem oder umgekehrt, mit dem Ergebnis, daß das Redoxsystem entweder mit Sauerstoff angereichert oder an Sauerstoff verarmt wird. Wenn gleichbleibende Betriebszustände zu überwachen sind, bei denen die Sauerstoff-Ionen ständig in einer Richtung fließen, wird das in der Meßsonde eingeschlossene Redoxsystem in absehbarer Zeit entweder vollständig oxidiert oder vollständig reduziert, so daß es seine Wirkung verliert. Eine solche Erschöpfung des Redoxsystems erfolgt bei gegebenen Betriebsbedingungen umso schneller, je kleiner die Masse des Redoxsystems ist. Diese Gefahr ist daher bei der erfindungsgemäßen Meßsonde besonders groß, da bei ihr die Verwendung äußerst geringer Mengen des Redoxsystems möglich ist. Zwar ist es möglich, Redoxsysteme durch elektrolytische Reduzierung oder Oxidierung wieder zu regenerieren, jedoch sind hierzu besondere Maßnahmen erforderlich, die den praktischen Einsatz einer solchen Sonde erschweren.

Der Erfindung liegt auch die Aufgabe zugrunde, ein Meßverfahren anzugeben, das bei Meßsonden mit einem abgeschlossenen Redoxsystem als Vergleichssubstanz und insbesondere bei Verwendung einer erfindungsgemäßen Sonde eine nahezu unbegrenzte Lebensdauer der Meßsonde gewährleistet.

Diese Aufgabe wird nach der Erfindung dadurch gelöst, daß die Temperatur der Meßsonde auf einem Wert gehalten wird, bei dem die Spannung zwischen den Anschlußleitungen null ist.

Bei dem erfindungsgemäßen Meßverfahren werden also nicht Temperatur und Spannung als zwei unterschiedliche Größen gemessen, die ein den Sauerstoffgehalt des die Meßsonde umgebenden Mediums angebendes Wertepaar bilden, sondern es wird die Temperatur der Meßsonde geregelt. Allerdings nicht etwa so, daß die Sonde eine vorgebene konstante Temperatur hat, sondern vielmehr so, daß die an die Meßsonde herrschende Spannung den Wert null hat. Das hat nicht nur den besonderen Vorteil, daß ein Nullpunkt besonders gut dazu geeignet ist, eine Regelspannung zur Regelung der Sondentemperatur abzuleiten, sondern es wird auf diese Weise die Meßsonde auf einer Temperatur gehalten, bei welcher kein Sauerstoff-Austausch mit der Umgebung mehr stattfindet. Zwar wird tatsächlich ein geringer Sauerstoff-Austausch stattfinden, nämlich in dem Maße, wie die tatsächliche Spannung vom Wert null abweicht, jedoch handelt es sich hierbei niemals um einseitige Abweichungen, sondern um häufig wechselnde Abweichungen, die sich zeitlich ausmitteln. Daher ist auf diese Weise gewährleistet, daß das in der Sonde eingeschlossene Redoxsystem weder durch vollständige Oxidation noch durch vollständige Reduktion erschöpft wird, was eine praktisch unbegrenzte Lebensdauer der Meßsonde zur Folge hat.

Ein weiterer bedeutender Vorteil liegt darin, daß bei der Spannung O auch kein Strom fließt und daher durch Kontakt-und Übergangswiderstände keine Fehler verursacht werden können. Auch eine Alterung der Sonde bleibt auf die Gleichgewichts-Temperatur ohne Einfluß.

Zugleich ist die Bestimmung des Sauerstoffgehaltes stark vereinfacht, weil bei Einhalten der genannten Bedingung eine eindeutige Beziehung zwischen der Sondentemperatur und dem Sauerstoffgehalt des die Meßsonde umgebenden Mediums besteht, der leicht zu Anzeige- oder Regelzwecken benutzt werden kann. Damit bietet das erfindungsgemäße Verfahren die Möglichkeit, die erfindungsgemäße Meßsonde trotz ihrer geringen Abmessungen und des entsprechend geringen Volumens des Redoxsystems unbedenklich über praktisch unbegrenzte Zeiträume einzusetzen, mit dem zusätzlichen Vorteil, daß infolge der eindeutigen Beziehung zwischen der genau meßbaren Sondentemperatur und dem Sauerstoffgehalt des umgebenden Mediums eine einfache Regelung des Sauerstoffgehaltes in diesem Medium möglich ist.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln für sich oder zu mehreren in beliebiger Kombination Abwendung finden. Es zeigen

Fig. 1       einen Längsschnitt durch eine Meßsonde nach der Erfindung in stark vergrößertem Maßstab,

Fig. 2       eine Draufsicht auf die Meßsonde nach Fig.1,

Fig. 3       einen Längsschnitt durch eine Ausführungsform einer mit einem Gehäuse versehenen Meßsonde und

Fig. 4       ein Diagramm zur Erläuterung des erfindungsgemäßen Verfahrens.

Die in den Fig. 1 und 2 in stark vergrößertem Maßstab dargestellte Meßsonde weist ein flächiges Bauteil 1 in Form eines Keramik-Plättchens auf, das auf seinen beiden einander gegenüberliegenden Seiten mit Isolierschichten 14 versehen ist, die im Bereich ihrer Mitte einander gegenüberliegende Fenster 15 aufweisen. Auf die Isolierschichten 14 sind Leitungsbahnen 2, 3 aufgedruckt oder aufgedampft, die jeweils ein die Fenster 15 überdeckendes Gitterwerk bilden und an die am Rand des Bauteiles 1 jeweils ein Leitungsdraht 4 bzw. 5 angeschlossen ist, beispielsweise durch Bonden. Auf einer Seite ist das Bauteil 1 in einem das entsprechende Fenster enthaltenden mittleren Abschnitt mit einer Schicht 6 aus Palladium/Palladiumoxid versehen, die von einem mit der Oberfläche des Bauteiles 1 fest verbundenen und dadurch die Palladium/Palladiumoxid-Schicht 6 hermetisch abschließenden Glastropfen 7 überdeckt wird. In diesen Glastropfen 7 ist ein Thermoelement 8 eingebettet, dessen Leitungen 9, 10 auf dem Glastropfen 7 herausragen. Auf der der Palladium/Palladiumoxid-Schicht 6 abgewandten Seite des Bauteiles 1 befindet sich noch ein beispielsweise mäanderförmig angeordneter Heizleiter 11 mit an seinen Enden angebrachten Leitungsdrähten 12, 13. Dieser Heizleiter kann ebenso wie die Elektroden 2, 3 aus Platin bestehen und ist von dem Bauteil 1 ebenfalls durch die Isolierschicht 14 getrennt.

Bei der beschriebenen Meßsonde steht in bekannter Weise das Redoxsystem, das von der in dem Glastropfen 7 eingeschlossenen Palladium/Palladiumoxid-Schicht 6 gebildet wird, über das einen festen Elektrolyten bildende keramische Bauteil 1 mit dem die Meßsonde 1 umgebenden Medium in einer solchen Wechselbeziehung, daß, je nachdem, ob der durch die Sondentemperatur bedingte Sauerstoff-Partialdruck in dem Redoxsystem größer oder kleiner ist als der Sauerstoff-Partialdruck in dem umgebenden Medium, ein Wandern von Sauerstoffionen durch das keramische Bauteil hindurch stattfindet, um den Sauerstoff-Partialdruck in dem Redoxsystem auf den gleichen Wert zu bringen wie den Sauerstoff-Partialdruck in dem umgebenden Medium. Je nachdem, in welcher Richtung die Sauerstoffionen das Bauteil 1 durchwandern, entsteht über diesem Bauteil eine positive oder negative Spannung, welche mit Hilfe der von den Leitungsbahnen 2 und 3 gebildeten Elektroden erfaßt und über die Leitungen 4, 5 einer Meßeinrichtung zugeführt wird.

Da der Sauerstoff-Partialdruck des Redoxsystems temperaturabhängig ist, ist auch die an dem vom Bauelement 1 gebildeten Elektrolyten herrschende Spannung temperaturabhängig, so daß sie nur in Verbindung mit der herrschenden Temperatur ein Maß für den Sauerstoffgehalt des die Meßsonde umgebenden Mediums ist. Das in den Glastropfen 7 eingebettete Thermoelement 8 ermöglicht eine genaue Bestimmung der Temperatur der Meßsonde.

Die Sauerstoffwerte, die mit solchen Meßsonden bestimmt werden sollen, erfordern gewöhnlich einen im Bereich zwischen 600° C und 1000° C liegende Temperatur der Meßsonde. Sofern das zu überwachende Medium nicht selbst eine entsprechende Temperatur hat, wie es beispielsweise bei Verbrennungsgasen der Fall ist, und dadurch die dem Medium ausgesetzte Meßsonde auf eine geeignete Temperatur bringt, muß die Meßsonde beheizt werden. Zu diesem Zweck dient der Heizleiter 11 mit seinen Anschlußleitungen 12, 13.

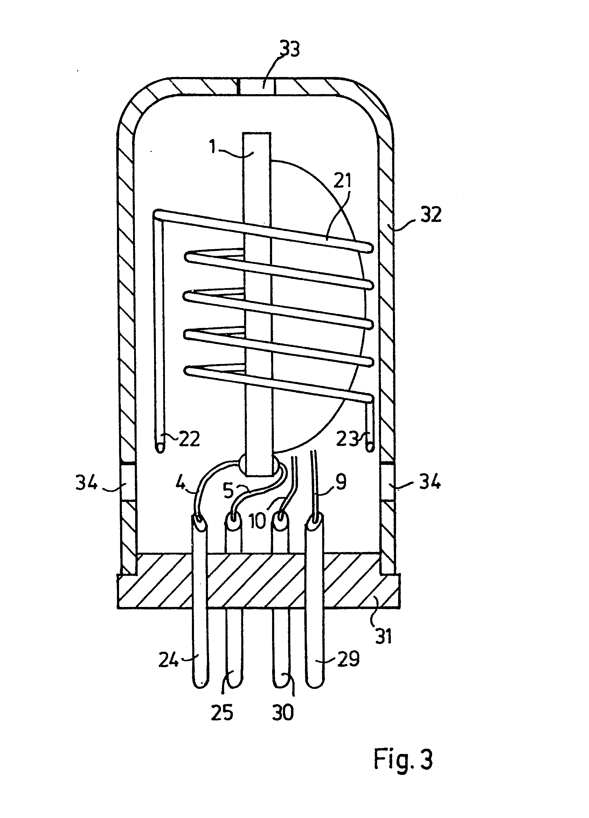

Die anhand der Fig. 1 und 2 beschriebene Meßsonde ist in der dargestellten Form voll funktionsfähig. Ihre Handhabung würde jedoch gewisse Schwierigkeiten bereiten, insbesondere im Hinblick auf die Gefahr, die Zuleitungen zu dem auf der Oberfläche des plattenförmigen Bauelementes angebrachten Leitungsbahnen zu beschädigen. Daher ist es zweckmäßig, die in den Fig. 1 und 2 dargestellte Meßsonde mit einem Gehäuse zu versehen, also zu kapseln. Fig. 3 zeigt eine mögliche Ausführungsform einer gekapselten Meßsonde. Der aktive Teil der Meßsonde nach Fig. 3 unterscheidet sich von der Meßsonde nach den Fig. 1 und 2 nur dadurch, daß auf dem flächigen Bauteil 1 kein Heizleiter 11 angebracht ist, sondern daß dieser Bauteil von einer besonderen Heizwendel 21 umgeben ist. Im übrigen ist der flächige Bauteil 1 mit Hilfe der Anschlußdrähte 4, 5 und 9, 10 mit den Anschluß- und Kontaktstiften 24, 25 bzw. 29, 30 eines Sockels 31 verbunden, zu dessen Oberfläche das plattenförmige Bauteil 1 senkrecht steht. Die Anschlußdrähte 22, 23 der Heizwendel 21 sind mit weiteren, in Fig. 3 nicht dargestellten Kontaktstiften im Sockel 31 verbunden. Auf den Sockel 31 ist eine das flächige Bauteil 1 und die Heizwendel 21 umgebende Haube 32 aufgesetzt, die Bohrungen 33, 34 zum Durchtritt des zu überwachenden Mediums aufweist. Durch die Kapselung der Meßsonde in das von dem Sockel 31 mit der Haube 32 gebildete Gehäuse entsteht ein robustes Bauelement, das mit Hilfe der aus dem Sockel 31 herausragenden Kontaktstifte leicht an der jeweiligen Meßstelle eingebaut werden kann.

Bei einem in der Praxis verwirklichten Ausführungsbeispiel der Erfindung besteht das flächige Bauteil aus einem Plättchen aus Zirkondioxid mit einer Größe von 4 x 6 mm$^2$. Der von der Palladium/Palladiumoxid-Schicht bedeckte Abschnitt hat eine Größe von etwa 2,5 mm Durchmesser.

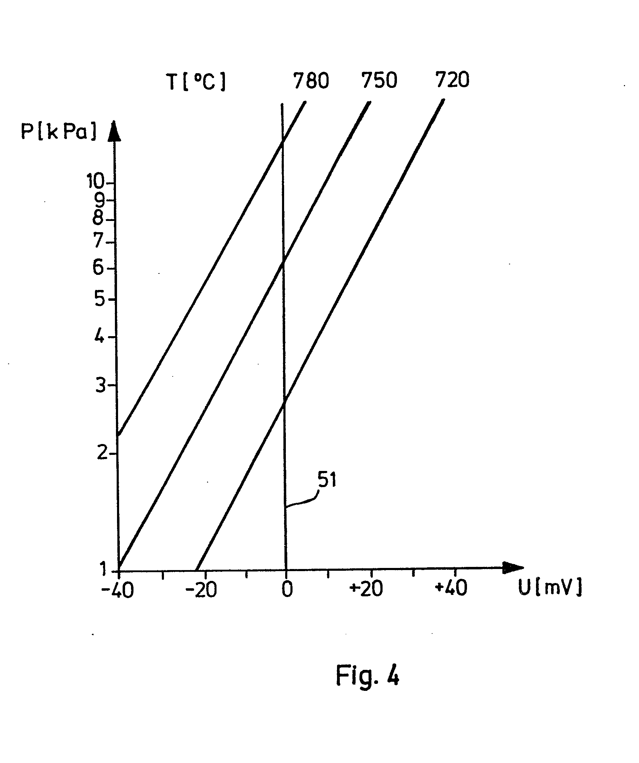

Das Diagramm nach Fig. 4 zeigt den Zusammenhang zwischen der in °C gemessenen Temperatur T, der an dem vom flächigen Bauteil gebildeten festen Elektrolyten herrschenden Spannung U in mV und dem in Pascal (Pa) gemessenen Partialdruck P des in einem Gasgemisch enthaltenen Sauerstoffs. Wie das Diagramm zeigt, ist der Sauerstoffgehalt durch Wertepaare von Temperatur und Spannung bestimmt. Nach dem erfindungsgemäßen Verfahren wird die Sonde jedoch so eingesetzt, daß die Temperatur stets auf einem Wert gehalten wird, bei dem die Spannung U über dem Elektrolyten, also dem keramischen Bauteil 1, gleich null ist. Demgemäß ist der Sauerstoffgehalt des Gasgemisches eindeutig durch den Schnitt der für die Spannung OV charakteristischen Geraden 51 mit der für die betreffende Temperatur charakteristischen Kurve bestimmt. Die auf diese Weise mögliche, eindeutige Bestimmung des Sauerstoffgehaltes gibt die Möglichkeit, den Sauerstoffgehalt auf einen gewünschten Wert einzuregeln. Das Einstellen der Sondentemperatur auf eine Sondenspannung von 0 V ermöglicht es einerseits, die Sauerstoff-Messungen mit sehr hoher Genauigkeit auszuführen, weil eine Nullpunkt-Regelung mit besonders hoher Genauigkeit möglich ist und auch Temperaturen ohne weiteres mit sehr hoher Genauigkeit gemessen werden können. Von besonderem Vorteil ist, daß die Spannung von 0 V darauf zurückzuführen ist, daß ein Gleichgewicht zwischen dem Partialdruck des in der Meßsonde eingeschlossenen Redoxsystems und dem Sauerstoff-Partialdruck des die Meßsonde umgebenden Mediums besteht, so daß keine Sauerstoffionen den festen Elektrolyten durchwandern. Damit wird aber das eingeschlossene Redoxsystem weder im Sinne einer zunehmenden Oxydierung noch einer zunehmenden Reduzierung dauernd verändert, so daß unter diesen Bedingungen die mit einem Redoxsystem als Vergleichssubstanz arbeitende Meßsonde eine praktisch unbegrenzte Zeit betriebsfähig bleibt. Außerdem können keine Störungen durch Kontakt- und Übergangswiderstände auftreten.

<u>Patentansprüche</u>

1.  Meßsonde zur Bestimmung des Sauerstoffgehaltes gasförmiger oder flüssiger Medien mit einer ein Metall/Me-
    talloxid-Redoxsystem, insbesondere Palladium/Palla-
    diumoxid, dicht einschließenden Kapsel, die eine von
    einem festen, Sauerstoffionen leitenden Elektrolyten
    gebildete Wandung aufweist, und mit die Wandung in dem
    vom Redoxsystem bedeckten Bereich an der Innen- und
    Außenseite kontaktierenden elektrischen Anschlußleitungen, dadurch gekennzeichnet, daß die Wandung von
    einem flächigen Bauteil (1) gebildet wird, das auf
    einer Seite einen mit dem Metall/Metalloxid-Redoxsystem beschichteten Abschnitt aufweist, über dem sich
    ein elektrisch isolierendes, undurchlässiges und
    wärmebeständiges Deckmaterial befindet.

2.  Meßsonde nach Anspruch 1, dadurch gekennzeichnet, daß
    das flächige Bauteil (1) eine ebene Keramikplatte
    ist.

3.  Meßsonde nach Anspruch 1 oder 2, dadurch gekennzeichnet, daß das Deckmaterial Glas ist.

4.  Meßsonde nach Anspruch 3, dadurch gekennzeichnet, daß
    das Glas einen Tropfen (7) bildet.

5.  Meßsonde nach einem der vorhergehenden Ansprüche,
    dadurch gekennzeichnet, daß die Anschlußleitungen (4,
    5) auf die Oberfläche des flächigen Bauteiles (1)
    aufgebrachte Leitungsabschnitte (2, 3) umfassen.

6. Meßsonde nach Anspruch 5, dadurch gekennzeichnet, daß die Leitungsabschnitte (2, 3 ) außerhalb des beschichteten Abschnittes von dem Bauteil durch eine Isolierschicht (14) getrennt sind.

7. Meßsonde nach einem der vorhergehenden Ansprüche mit integriertem Thermoelement, dadurch gekennzeichnet, da das Thermoelement (8) in das Deckmaterial, insbesondere den Glastropfen (7), eingebettet ist.

8. Meßsonde nach einem der vorhergehenden Ansprüche, dadurch gekennzeichnet, daß wenigstens auf einer Seite des flächigen Bauteiles (1) die Leiter eines elektrischen Heizelementes (11) aufgebracht sind.

9. Meßsonde nach Anspruch 8, dadurch gekennzeichnet, daß die Leiter des Heizelementes (11) auf der der Seite mit dem beschichteten Abschnitt entgegengesetzten Seite des flächigen Bauteiles (1) aufgebracht sind.

10. Meßsonde nach einem der Ansprüche 1 bis 7, dadurch gekennzeichnet, daß das flächige Bauteil (1) von einer Heizwendel (21) umgeben ist.

11. Meßsonde nach einem der vorhergehenden Ansprüche, dadurch gekennzeichnet, daß das flächige Bauteil (1), gegebenenfalls zusammen mit einer es umgebenden Heizwendel (21), in ein Durchtrittsöffnungen (33, 34) für das zu überwachende Medium aufweisendes Gehäuse (31, 32) eingebaut ist.

12. Verfahren zur Bestimmung des Sauerstoffgehaltes gasförmiger oder flüssiger Medien unter Verwendung einer
Meßsonde mit einer ein Metall/Metalloxid-Redoxsystem
dicht einschließenden Kapsel, die eine von einem
festen Elektrolyten gebildete Wandung aufweist, und
mit die Wandung von dem vom Redoxsystem bedeckten
Bereich an der Innen- und Außenseite kontaktierenden
elektrischen Anschlußleitungen, insbesondere unter
Verwendung einer Meßsonde nach einem der Ansprüche 1
bis 10, bei welchem Verfahren die Temperatur der
Meßsonde und die zwischen den Anschlußleitungen herrschende Spannung gemessen wird, dadurch gekennzeichnet, daß die Temperatur der Meßsonde auf einem Wert
gehalten wird, bei dem die Spannung zwischen den
Anschlußleitungen null ist.

Fig. 1

Fig. 2

Fig. 3

Fig. 4

Europäisches
Patentamt

EUROPÄISCHER RECHERCHENBERICHT

0183123

Nummer der Anmeldung

EP 85 11 4346

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | EP-A-0 012 647 (THOMSON-CSF)<br>* gesamtes Dokument * | 1,2 | G 01 N 27/56 |
| Y | | 3 | |
| | --- | | |
| Y | DE-A-2 808 621 (TOYOTA J.K.K.K.)<br>* gesamtes Dokument * | 3 | |
| | --- | | |
| A | GB-A-1 604 446 (SYBRON CORP.)<br>* gesamtes Dokument * | 1-12 | |
| | --- | | |
| A | US-A-4 045 319 (C.H. DEPORTES et al.)<br>* gesamtes Dokument; & DE - A - 2 443 037 (Kat. D) * | 1-8 | |
| | ----- | | RECHERCHIERTE SACHGEBIETE (Int Cl.4)<br><br>G 01 N 27/56 |

Der vorliegende Recherchenbericht wurde für alle Patentansprüche erstellt

| Recherchenort<br>BERLIN | Abschlußdatum der Recherche<br>14-02-1986 | Prüfer<br>BRISON O.P. |
|---|---|---|